# EUROPEAN PATENT APPLICATION

(11) **EP 1 271 328 A1**
(43) Date of publication of application: **02.01.2003**
(21) Application number: 01908179.3
(22) Date of filing: 01.03.2001
(51) Int. Cl.: G06F 13/10, G06K 19/00

(54) **VARIABLE-MODE PC CARD AND INPUT/OUTPUT CONTROL DEVICE OF PC CARD**

(30) Priority: 01.03.2000 JP 2000055893; 20.02.2001 JP 2001042972
(71) Applicant: Sony Computer Entertainment Inc., Tokyo 107-0052 (JP)
(72) Inventor: INOMATA, Y. c/o SONY COMPUTER ENTERTAINMENT INC., Minato-ku Tokyo 107-0052 (JP); IO, Hideaki c/o SONY COMPUTER ENTERTAINMENT INC., Minato-ku Tokyo 107-0052 (JP); FUKUSHIMA, S. c/o SONY COMPUTER ENTERTAINMENT INC., Minato-ku Tokyo 107-0052 (JP)
(74) Representative: Müller, Frithjof E., Dipl.-Ing.
(86) International application number: JP0101547
(87) International publication number: WO01065383

(57) **Abstract**

The pin definition of a PC card having a plurality of specification modes is changed stepwise in a state that it is mounted in a PC card slot. This realizes mode switching in an active state while preventing the pin functions of the PC card 10 and the PC card slot 20 from conflicting with each other. A standardized mode is employed when the PC card 10 is in the initial state. Information to the effect that the PC card is mode-switchable is written to a special area of the PC card 10 in advance. This makes it possible to use the PC card for general purposes.

## Description

### TECHNICAL FIELD

The present invention relates to a PC card that is used for extending functions of an information processing apparatus, as well as to a PC card input/output control device.

### BACKGROUND ART

PC cards are used being mounted in a card slot of a computer apparatus to extend the memory of the computer, to enhance various input/output functions, etc. In particular, PC cards are frequently used in notebook-sized computers and portable computers. Physical and electrical specifications of PC cards such as interface and bus specifications are standardized by cooperative work of the two organizations of Japan Electronic Industry Development Association (JEIDA) and PCMCIA. Generally, currently existing standardized PC card specifications are "16-bit PC card", "CardBus", and "ZV port".

In PC cards, by altering the pin allocation, it is possible to formulate an interface dedicated to a new, specific use. This method is generally employed as a method for formulating a custom interface. The above-mentioned "ZV port" is a custom interface implementation. For example, even in an entertaining apparatus using, inside, an original bus other than a PCI bus, the use of a custom interface makes it possible to derive signals from the original bus to the outside via a PC card slot.

Such PC cards can be mounted in the same card slot. When a PC card is mounted in a card slot, the computer apparatus that supports the specifications of the respective types of PC cards recognizes the specification of the mounted PC card and operates according to a corresponding operation specification. From the viewpoint of computers, computers can use a PC card within the confines of a standard specification defined for it as long as its operation specification is supported in advance.

### DISCLOSURE OF THE INVENTION

On the other hand, when necessary it may become desired to use a PC card having an original specification itself. For example, there may occur a case that a PC card having a function other than the functions of its standard specification is necessary, such as a memory that is improved in transfer rate or a memory that is extended in bus width. In computers, there may occur a case that using a PC card according to an originally customized specification is necessary to enhance the performance of a particular application. It is possible to manufacture a PC card that is dedicated to such a purpose and use it. However, in view of the cost and the distribution, it is desired that a PC card having a customized specification be realized based on a PC card having a standard specification if possible.

An object of the present invention is to provide a technique relating to a PC card that can be mounted in a standard card slot, can operate according to a standard specification as well as a non-standard, particular specification, and enables switching between the two specifications in an active state.

A PC card according to the invention supports a plurality of specification modes. The mode can be switched in response to a switching signal from a host with the PC card kept inserted in a slot. Information to the effect that the PC card is mode-switchable is stored in the PC card.

A PC card input/output control device according to the invention has means for detecting whether a PC card inserted therein is mode-switchable. The PC card input/output control device also has means for switching the mode of the PC card by changing pin definitions of a PC card slot and the PC card in a state that the PC card is inserted, if the inserted PC card is mode-switchable.

### BRIEF DESCRIPTION OF THE DRAWINGS

Fig. 1 shows an appearance of a PC card according to an embodiment of the present invention;
Fig. 2 is a block diagram showing the configuration of the PC card according to an embodiment of the invention;
Fig. 3 is a block diagram showing the configuration of a PC card input/output control device according to an embodiment of the invention; and
Fig. 4 shows a switching circuit having 3-state buffers.

### BEST MODE FOR CARRYING OUT THE INVENTION

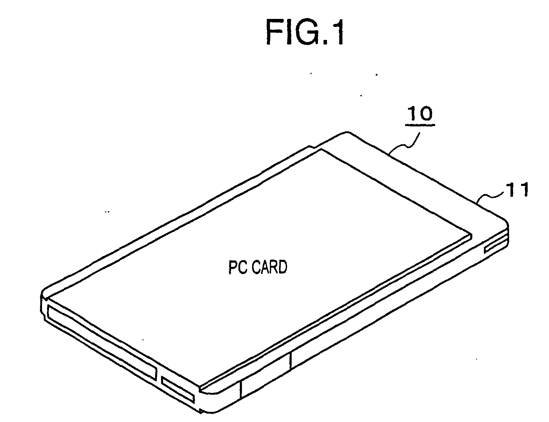

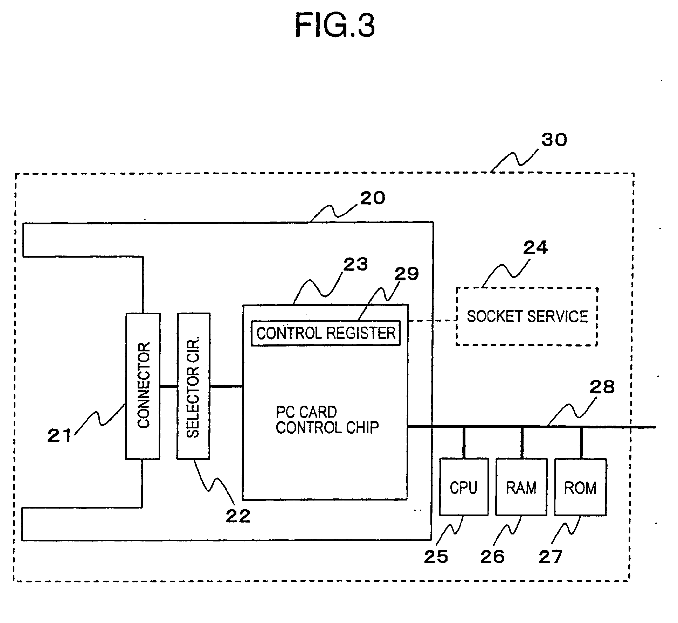

Fig. 1 shows an appearance of a PC card according to an embodiment of the present invention. Reference numeral 10 denotes a PC card main body and numeral 11 denotes a connector portion of the PC card. The connector 11 is a portion to be connected to a connector 21 (see Fig. 3) of a PC card slot. The connector 11 has 68 signal pins in total in such a manner that 34 pins are provided at each of upper and lower portions. These signal pins are assigned to data signals, address signals, etc. Since the pin arrangement definition varies depending on the specification, a mechanism is provided in which a PC card slot detects an attribute of the PC card 10 when the PC card 10 is inserted into the PC card slot, whereby a corresponding pin arrangement definition is employed.

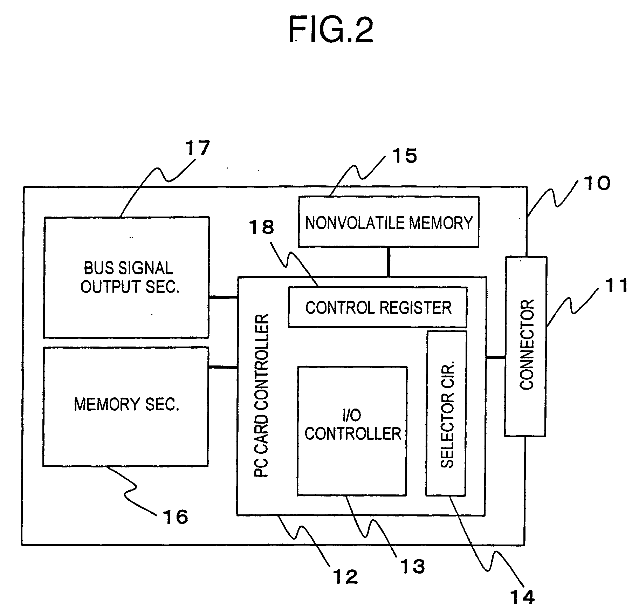

Fig. 2 is a block diagram showing the configuration of the PC card 10 according to an embodiment of the invention. In this embodiment, the PC card 10 has two modes, that is, a mode in which it operates as a memory card according to the "16-bit PC card" specification and a mode in which it operates as a "bus signal output card" according to a custom specification. In the initial state after card insertion, the "16-bit PC card" mode is established. The PC card 10 of this embodiment operates at 3.3 V.

The PC card 10 is composed of the connector 11, a PC card controller 12, a nonvolatile memory 15, a memory section 16, and a bus signal output section 17. However, the invention is not limited to this configuration.

The PC card controller 12 has an I/O controller 13 and a selector circuit 14.

The nonvolatile memory 15, which is such a memory as an EEPROM, is connected to the PC card controller 12. The nonvolatile memory 15 is provided with memory area called an attribute memory. Card configuration data called "tupple" are held in the attribute memory. The tupple indicates a device ID, a function ID, etc. A collection of tupples is called "CIS" (card attribute information).

Information to the effect that the PC card 10 concerned is mode-changeable is stored in a particular area of the nonvolatile memory 15. The particular area need not be referred to by devices other than a PC card input/output control device that is provided by the invention. Therefore, for example, the information to the effect that the PC card 10 is mode-changeable can be written with the following methods. In a first method, it is written to the attribute memory of the PC card 10 at the address next to the end address of the configuration data. In a second method, it is written as part of a tupple to which manufacture data of the PC card 10 belongs. It is also possible to write it to a control register 18 of the PC card controller 12.

As mentioned above, the PC card 10 according to this embodiment has the two modes, that is, the mode in which it operates as a memory card according to the "16-bit PC card" specification and the mode in which it operates as a "bus signal output card" according to a custom specification. To this end, the memory section 16 and the bus signal output section 17 are connected to the PC card controller 12. The PC card controller 12 judges the mode of the PC card 10 by referring to the control register 18 for mode control that is provided in the PC card controller 12 or the nonvolatile memory 15. Mode switching between the "16-bit PC card" and the "bus signal output card" can be performed in an active state by switching the selector circuit 14 according to the mode of the PC card 10.

Fig. 3 is a block diagram showing the configuration of a PC card input/output control device according to the invention. A PC card input/output control device 30, which functions as a host of a PC card, is composed of a PC card slot 20, a socket service 24 for controlling the PC card slot 20, a CPU 25, a RAM 26 that is a main memory, a ROM 27, and an internal bus 28. In general, the PC card input/output control device 30 is configured as part of an information processing apparatus. The invention is not limited to the above configuration.

The PC card slot 20 has a connector 21, a selector circuit 23, and a PC card control chip 23. The PC card control chip 23 is controlled by the socket service 24 that is software. Connected to the internal bus 28, the PC card control chip 23 can exchange information with the CPU 25 etc. A control register 29 is provided inside the PC card control chip 23.

The connector 21, which is a portion to be connected to the connector 11 of a PC card, has the terminals of 34 pins at each of upper and lower portions. The pins have a hot plug function that enables insertion and removal of a PC card while the PC card input/output control device 30 is operating as well as a card automatic detection function of detecting insertion or removal of a PC card automatically and reporting it to the CPU 25. To this end, two card detection pins (CD #1 and CD #2) are provided and the pins have three kinds of length.

Power pins are the longest, signal pins are intermediate, and the detection pins (CD #1 and CD #2) are the shortest. Watching connection and disconnection of the detection pins, the PC card control chip 23 reports insertion, removal or the like of the PC card to the CPU 25 of the PC card input/output control device 30 by causing an interrupt.

A description will be made of processing that is performed when the mode-switchable PC card 10 is inserted into the PC card slot 20.

When the PC card 10 is inserted into the PC card slot 20, the PC card input/output control device detects the type and the supply voltage of the PC card by using the card detection pins (CD #1 and CD #2) and voltage detection pins (VS #1 and VS #2). Since the PC card 10 of the embodiment is in the "16-bit PC card mode" in the initial state and operates at 3.3 V, as prescribed by the standard the card detection pins (CD #1 and CD #2) and the voltage detection pins (VS #1 and VS #2) are in the following states:
- CD #1:: GND
- CD #2:: GND
- VS #1:: GND
- VS #2:: OPEN

Detecting the above states, the PC card input/output control device 30 recognizes that the inserted PC card 10 is a "16-bit PC card" which operates at 3.3 V and starts to operate according to the pin arrangement definition of the "16-bit PC card."

Then, the PC card input/output control device 30 reads out the CIS from the PC card 10, recognizes that the PC card 10 is a memory card, and performs subsequent processing in such a manner that the socket service 24 controls the control chip 23 of the PC card slot 20.

Next, a description will be made of a means by which the PC card input/output control device 30 according to the invention detects whether the inserted PC card 10 is mode-switchable.

The CPU 25 performs various kinds of processing according to instructions from the OS (operating system) or an application program that has been read into the main memory 26. The processing of detecting whether the inserted PC card 10 is mode-switchable can be performed when necessary while the application program is being executed, or can be performed according to instructions from the OS subsequently to completion of the above processing that is performed when the PC card 10 is inserted. The element that performs this processing is not limited to the CPU 25 and may be a dedicated control chip. A program necessary for execution of this processing may be stored in such a recording medium as a CD-ROM or a hard disk drive. Naturally, such a program may be stored in a semiconductor device in the form of firmware.

The PC card input/output control device 30 refers to a preset, particular area of the PC card 10, for example, an area whose address is next to the end address of the configuration data of the PC card 10. Of course the area to be referred to is not limited to this but can be a predetermined particular area. If information to the effect that the PC card 10 is mode-switchable is stored in such an area, the PC card input/output control device 30 recognizes that the inserted PC card 10 is mode-switchable.

Next, a description will be made of a means for PC card input/output control device 30 changing the mode of the PC card 10 in a case where the inserted PC card 10 is mode-switchable.

To change the mode, it is necessary to change the pin arrangement definitions of both of the PC card 10 and the PC card slot 20. However, if the pin arrangement definitions of the PC card 10 and the PC card slot 20 were changed simultaneously, the pin arrangement definitions might conflict with each other, causing an abnormal operation. In view of this, the pin arrangement definitions are changed so that the following transition states of four stages are passed through.

At the first stage, related pins of the PC card slot 20 are caused to stop functioning. At the second stage, the pin arrangement definition of the PC card slot 20 is switched. At the third stage, the pin arrangement definition of the PC card 10 is switched. At the fourth stage, the related pins of the PC card slot 20 are caused to function again and the PC card 10 is caused to operate in the post-switching mode.

The above processing is performed only on the pins whose definitions should be changed. Therefore, the pins whose definitions need not be changed are kept functioning. Control signals for the switching processing that are supplied from the PC card slot 20 to the PC card 10 go through pins whose definitions need not be changed and that hence keep functioning.

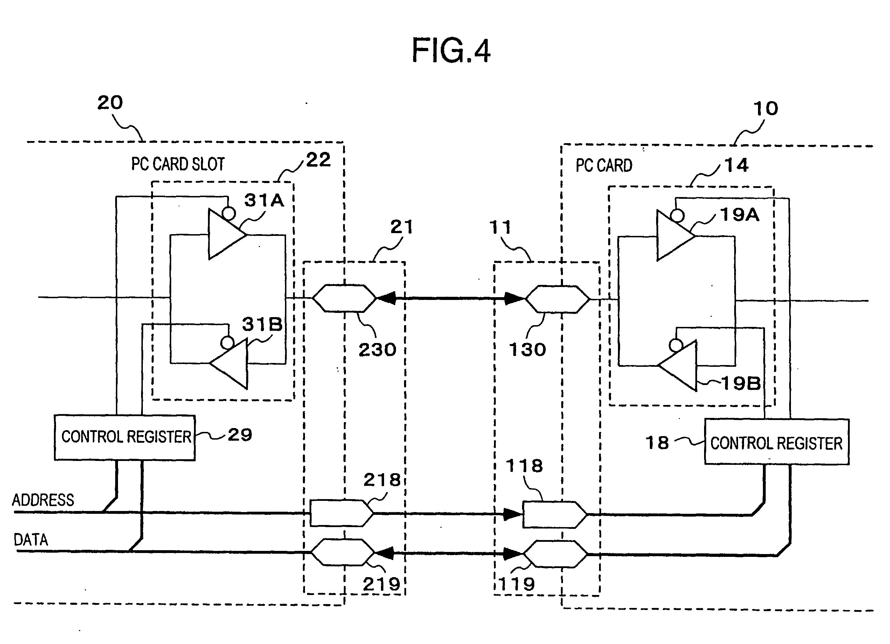

For example, as shown in Fig. 4, a #30 pin 130 of the PC card 10 and a #30 pin 230 of the PC card slot 20 are defined as a data bus in the "16-bit PC card" mode and as an address bus in the "bus signal output mode" . Therefore, in the initial state before switching, the #30 pin 230 of the PC card slot 20 functions as a data input terminal and the #30 pin 130 of the PC card 10 functions as a data output terminal. Since the pin definitions of #18 pins 118 and 218 and #19 pins 119 and 219 do not vary, switching control signals are supplied by using these pins.

At the first stage, the #30 pin 230 of the PC card slot 20 is rendered in a high-impedance state and is thereby stopped functioning as an input terminal.

At the second stage, the definition of the #30 pin 230 of the PC card slot 20 is changed to an address bus. Specifically, the contents of the control register 29 of the PC card control chip 23 are rewritten. The selector circuit 22 of the PC card slot 20 changes the pin arrangement definition of the PC card slot 20 by referring to the contents of the control register 29. At this time, the #30 pin 230 of the PC card slot 20 is kept in the high-impedance state and is thereby prevented from functioning as an address bus. On the other hand, the #30 pin 130 of the PC card 10 keeps functioning as a data bus.

At the third stage, the definition of the #30 pin 130 of the PC card 10 is changed to an address bus. Specifically, the contents of the control register 18 of the PC card 10 are rewritten by using signals that are supplied via the #18 pin 218 and the #19 pin 219 of the PC card slot 20. Referring to the contents of the control register 18, the selector circuit 14 of the PC card 10 changes the pin definition of the #30 pin 130 of the PC card 10 and switches the mode.

At the fourth stage, the state of the #30 pin 230 of the PC card slot 20 is changed from the high-impedance state to a signal output state, whereby the #30 pin 230 comes to function as an address output pin.

Pieces of processing similar to the above are performed simultaneously on the other pins whose definitions need to be changed, whereby the mode of the PC card 10 can be changed from the "16-bit PC card" mode to the "bus signal output card" mode. The pin definition switching and the establishment of a high-impedance state can be realized easily by providing 3-state buffers 19A, 19B, 31A, and 31B in the selector circuits 11 and 22 and setting the states of these buffers in accordance with the contents of the control registers 18 and 29.

Where the function of a pin of the PC card slot 20 from an output terminal to an input terminal, when the definition of the pin is switched at the first stage, the pin is rendered in a disable state rather than a high-impedance state. This prevents a conflict that would otherwise be caused by the pin definition switching.

That is, a high-impedance state is established at the first stage if the post-change function of a pin of the PC card slot 20 should be an output terminal. A disable state is established at the first stage if the post-change function of a pin of the PC card slot 20 should be an input terminal. In this manner, a pin function can be changed from an input terminal to an output terminal as well as from an output terminal to an input terminal. Pin function switching from an input terminal to an input terminal or from an output terminal to an output terminal can be performed in a similar manner.

The above-described processing enables not only switching from the "16-bit PC card" specification to the "bus signal output card" specification (described above) but also reversible switching between various specifications. The above processing accommodates a case where a PC card is provided with three or more kinds of specifications.

Next, a description will be made of processing that is performed when the mode-switchable PC card 10 is inserted into a PC card input/output control device other than the PC card input/output control device according to the invention.

The PC card slot detects the card type and the supply voltage using the card detection pins (CD #1 and CD #2) and the voltage detection pins (VS #1 and VS #2). Recognizing that the PC card 10 that is inserted in the PC card slot is a "16-bit PC card" that operates at 3.3 V, the PC card input/output control device starts operating according to the pin arrangement definition of a memory card that is a "16-bit PC card."

Then, the PC card slot reads out the CIS of the PC card 10. The PC card input/output control device recognizes that the PC card 10 is a memory card, and performs subsequent processing with such a recognition. Since the PC card slot cannot obtain information that the inserted PC card 10 is mode-switchable, the PC card input/output control device functions only in such a manner as to operate when an ordinary memory card is inserted.

As described above, the PC card 10 according to the invention can be used for general purposes; it can be used being mounted in not only the dedicated PC card input/output control device 30 but also an information processing apparatus having a general PC card input/output control device.

Next, a description will be made of a case where a general, mode-unswitchable PC card other than the PC card 10 according to the invention is inserted into the PC card input/output control device 30 according to the invention.

The PC card input/output control device 30 detects the card type and the supply voltage using the card detection pins (CD #1 and CD #2) and the voltage detection pins (VS #1 and VS #2). Recognizing that the PC card that is inserted in the PC card slot is a "16-bit PC card" that operates at 3.3 V, the PC card input/output control device 30 starts operating according to the pin arrangement definition of a memory card that is a "16-bit PC card."

Then, the PC card input/output control device 30 reads out the CIS of the PC card, recognizes that the PC card is a memory card, and performs subsequent processing with such a recognition.

When an instruction to detect whether the PC card is mode-switchable is issued from the OS (operating system) or an application program that has been read into the main memory 26, the PC card input/output control device 30 refers to a particular area in the PC card. Since information to the effect that the PC card is mode-switchable is not stored in any of PC cards other than the PC card 10 according to the invention, the PC card input/output control device 30 recognizes that the inserted PC card is mode-unswitchable. Then, according to instructions from the OS or the application program, the PC card input/output control device 30 urges the user to replace the PC card or performs processing to be performed when the mode is not switched.

In this manner the PC card input/output control device 30 can be used by inserting not only PC card 10 according to this invention but also general PC cards.

As described above, the invention makes it possible to change, without turning off the power of the PC input/output control device, the mode of a PC card that supports a plurality of specifications.

Further, by employing a standardized specification in the initial state, the invention makes it possible to use a PC card having a custom interface specification mode for general purposes, that is, in general information processing apparatuses.

## Claims

1. A PC card capable of operating in a plurality of modes having different pin arrangement definitions, comprising:
storing means for storing information indicating that the PC card is mode-switchable; and
means for switching a mode in response to a request from a host that is mounted with the PC card.

2. The PC card according to claim 1, wherein the PC card operates in a standardized mode in an initial state after being mounted in the host.

3. The PC card according to claim 2, wherein the PC card operates in a custom interface mode after the mode is switched.

4. APC card input/output control device comprising:
detecting means for detecting whether a PC card mounted therein is mode-switchable; and
means for switching a mode of the PC card and for causing the PC card to operate in a post-switching mode, if it is detected that the PC card is mode-switchable.

5. The PC card input/output control device according to claim 4, wherein the switching and causing means executes a process comprising the steps of:
stopping functioning of a signal terminal of the PC card input/output control device;
changing a definition of the signal terminal of the PC card input/output control device;
changing a definition of a corresponding signal terminal of the PC card; and
causing the signal terminal of the PC card input/output control device to start functioning again.

6. The PC card input/output control device according to claim 4, wherein the detecting means judges that the PC card is mode-switchable if prescribed information is stored in a predetermined storage area of the mounted PC card.

7. A program for controlling a PC card input/output control device by causing the PC card input/output control device to execute a process comprising the steps of:
detecting whether a PC card mounted therein is mode-switchable; and
switching a mode of the PC card and causing the PC card to operate in a post-switching mode, if it is detected that the PC card is mode-switchable.

8. The program according to claim 7, wherein the switching and causing step comprises the substeps of:
stopping functioning of a signal terminal of the PC card input/output control device;
changing a definition of the signal terminal of the PC card input/output control device;
changing a definition of a corresponding signal terminal of the PC card; and
causing the signal terminal of the PC card input/output control device to start functioning again.

9. A recording medium on which the program according to claim 7 or 8 is recorded.
